**Europäisches Patentamt**

(19) **European Patent Office**

**Office européen des brevets**

(11) Veröffentlichungsnummer: **0 053 599**
**B1**

(12) **EUROPÄISCHE PATENTSCHRIFT**

(45) Veröffentlichungstag der Patentschrift :
19.12.84

(51) Int. Cl.³ : **B 61 L 3/22**, H 04 B 5/02

(21) Anmeldenummer : **81890148.0**

(22) Anmeldetag : **02.09.81**

(54) Anlage zur Induktiven Übertragung von Signaltelegrammen zwischen einer ortsfesten Sende- und Empfangsstation und einzelnen Fördermitteln.

(30) Priorität : **01.12.80 AT 5846/80**

(43) Veröffentlichungstag der Anmeldung :
**09.06.82 Patentblatt 82/23**

(45) Bekanntmachung des Hinweises auf die Patenterteilung : **19.12.84 Patentblatt 84/51**

(84) Benannte Vertragsstaaten :
**BE CH DE FR GB IT LI LU NL SE**

(56) Entgegenhaltungen :
**AT-B- 242 192**
**AT-B- 254 256**
**DE-A- 1 455 370**
**DE-A- 2 215 442**
**DE-A- 2 728 765**
**DE-B- 1 455 382**
**DE-B- 1 918 911**
**GB-A- 1 311 027**

(73) Patentinhaber : **VOEST-ALPINE Aktiengesellschaft**
**Werksgelände**
**A-4010 Linz (AT)**

(72) Erfinder : **Gidl, Günter, Dipl.-Ing. Dr.**
**Tegetthofstrasse 26**
**A-4020 Linz (AT)**

(74) Vertreter : **Hübscher, Gerhard, Dipl.-Ing. et al**
**Patentanwälte Dipl.-Ing. Gerhard Hübscher Dipl.-Ing.**
**Helmut Hübscher Dipl.-Ing. Heiner Hübscher Spit-**
**telwiese 7**
**A-4020 Linz (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Anlage zur induktiven Übertragung von Signaltelegrammen zwischen einer ortsfesten Sende- und Empfangsstation und einzelnen Fördermitteln, die jeweils einen Sender und einen Empfänger aufweisen, der nur auf Signaltelegramme mit einem bestimmten, eine Kennung für das jeweilige Fördermittel bildenden Codesignal anspricht, und die auf einer Fahrbahn entlang einer sich über die Fahrbahnlänge erstreckenden, an den Sendeteil der ortsfesten Sende- und Empfangsstation angeschlossenen Sendeschleife bewegbar sind, neben der entlang der Fahrbahn eine mit dem Empfangsteil der ortsfesten Sende- und Empfangsstation verbundene Rückmeldeleitung vorgesehen ist.

Bei bekannten Anlagen zur induktiven Übertragung von Signaltelegrammen zwingt die entlang der Fahrbahn für die Fördermittel verlegte Induktionsschleife zu einer Mehrfachausnützung des Übertragungsweges, beispielsweise durch die Verwendung mehrer Trägerfrequenzen, die mit dem zu übertragenden Signaltelegramm moduliert werden. Über die Induktionsschleife können somit gleichzeitig mehrere Signaltelegramme übertragen werden, und zwar sowohl von der Sende- und Empfangsstation zu den Fördermitteln als auch von den Fördermittel zur Sende- und Empfangsstation. Nachteilig bei dem Verfahren der Frequenzmodulation ist allerding eine höhere Empfindlichkeit gegenüber Störungen und ein größerer Aufwand.

Können die Übertragungsraten gering bleiben, so bietet sich die Möglichkeit an, mehrere Frequenzkanäle im Sprachfrequenzbereich vorzusehen, wobei die Signaltelegramme in Form von Impulstelegrammen übermittelt werden. Jedem Fördermittel kann dabei eine andere Frequenz zugeordnet sein. Es ist aber auch möglich, das anzusprechende Fördermittel durch eine Codierung im Impulstelegramm bei gleichen Frequenzen für alle Fördermittel anzuwählen, wenn der Empfänger der Fördermittel nur auf ein bestimmtes, eine Kennung des Fördermittels bildendes Codesignal anspricht. Durch das entfallen einer Trägerfrequenz kann zwar der Aufwand bei einem solchen Übertragungsverfahren vergleichsweise gering gehalten werden, doch muß dafür eine wesentlich geringere Übertragungsrate in Kauf genommen werden.

Um die Übertragungsrate mit einfachen Mitteln erhöhen zu können, ist es bekannt (GB-A-1 311 027), neben einer Sendeschleife auch eine Rückmeldeschleife entlang von Streckenabschnitten einer Schienenbahn zu verlegen, so daß für die Rückmeldetelegramme ein gesonderter Übertragungsweg geschaffen wird, was hinsichtlich der erreichbaren Übertragungsrate erhebliche Vorteile mit sich bringt. Nachteilig ist allerdings — wie bei den anderen bekannten Anlagen auch —, daß die von den beweglichen Fördermitteln and die ortsfeste Sende- und Empfangsstation übertragenen Rückmeldetelegramme keine Information über den jeweiligen Standort des sendenden Fördermittels beinhalten. Um die Lage der Fördermittel erfassen zu können, müßten Wegmessungen durchgeführt werden, indem beispielsweise Wegmarken gezählt werden. Eine solche Wegmarkenzählung ist aber aufwendig, insbesondere dann, wenn zur Fehlervermeidung die Lage der Fördermittel mit Hilfe von entlang der Fahrbahn angeordneten Detektoren zusätzlich erfaßt werden muß, die das Überfahren durch ein Fördermittel anzeigen.

Um die Fahrtrichtung eines Zuges in einfacher Weise feststellen zu können, ist es bekannt (DE-B-1 918 911), zwei Leiterschleifen hintereinander entlang eines Streckenabschnittes zu verlegen. Diese Leiterschleifen sind dabei so bemessen, daß sie größer als die kleinste und kleiner als die größte vorkommende Länge der Schienenfahrzeuge sind, wodurch der Fahrweg für den Straßenverkehr bei schienengleichen Wegübergängen unmittelbar nach dem Vorbeifahren des Schienenfahrzeuges freigegeben werden kann.

Schließlich ist es bekannt (DE-B-1 455 382 bzw. DE-A-1 455 370), mehrere entlang eines Streckenabschnittes verlegte, über eine gemeinsame Übertragungsleitung an eine Sende- und Empfangsstation angeschlossene Leiterschleifen vorzusehen. Da diese Leiterschleifen über eine gesonderte Steuerung vom Ende eines Streckenabschnittes ausgehend entgegen der Fahrtrichtung zyklisch mit der Sende- und Empfangsstation verbunden werden, kann eine Lageerfassung des Schienenfahrzeuges erfolgen, wenn das ausgesandte Anrufsignal vom Schienenfahrzeug quittiert wird. Nachteilig ist allerdings der vergleichsweise große Steueraufwand, die geringe Übertragungsrate und die Notwendigkeit, daß sich in jedem Streckenabschnitt nur ein einziges Schienenfahrzeug befindet, was zwar bei Unterpflaster- und Straßenbahnen, nicht aber bei Industrieanlagen gefordert werden kann.

Der Erfindung liegt somit die Aufgabe zugrunde, diese Mängel zu vermeiden und eine Anlage zur induktiven Übertragung von Signaltelegrammen zwischen einer ortsfesten Sende- und Empfangsstation und einzelnen Fördermitteln der eingangs geschilderten Art so zu verbessern, daß gleichzeitig mit der Übertragung der Signaltelegramme eine Lageerfassung der einzelnen Fördermittel erreicht wird.

Die Erfindung löst die gestellte Aufgabe dadurch, daß die Rückmeldeleitung aus mehreren je einem Fahrbahnabschnitt zugeordneten, an je einer Empfangseinheit des Empfangsteiles der ortsfesten Sende- und Empfangsstation angeschlossenen Rückmeldeschleifen besteht, deren Länge der Länge der Fördermittel entsprechen.

Das Vorsehen von Rückmeldeschleifen, die einzelnen Fahrbahnabschnitten zugeteilt sind, erlaubt die einfache Lageerfassung der Fördermittel, weil das Rückmeldetelegramm nur über die Rückmeldeschleife empfangen werden kann, in deren Bereich sich das Fördmittel befindet. Die Rückmeldeschleifen bilden außerdem gesonderte Übertragungswege, die entsprechende Übertragungsraten sicherstellen, so daß die Signaltelegramme im Niederfrequenzbereich übertragen werden können. Um sicherzustellen, daß sich im Bereich jeder Rückmeldeschleife höchstens ein Fördermittel befinden kann, entspricht die Länge der Rückmeldeschleife der Länge der Fördermittel, was eine lückenlose Überwachung der Fördermittel über die gesamte Fahrbahnlänge ermöglicht.

Um für die Sendeschleife und die Rückmeldeschleifen die gleichen Frequenzen verwenden zu können, muß dafür gesorgt werden, daß kein Übersprechen zwischen den Schleifen stattfinden kann. Dies wird ohne besondere Abschirmung in besonders einfacher Weise dadurch sichergestellt, daß die Sendeschleife und die Rückmeldeschleifen in aufeinander senkrecht stehenden Ebenen liegen, von denen zumindest eine die Längsachse der jeweils der anderen Ebene zugehörigen Schleife enthält. Die mit diesen Maßnahmen erzwungene, zueinander mittige und senkrechte Anordnung der Schleifen bewirkt, daß das magnetische Feld der einen Schleife in der anderen keine Spannung induzieren kann. Die Sende- und Empfangsantennen der Fördermittel müssen selbstverständlich entsprechende Lagen zueinander und zu den Schleifen einnehmen.

Die einzelnen Fördermittel werden von der ortsfesten Sende- und Empfangsstation über ein bestimmtes, eine Kennung für das jeweilige Fördermittel bildendes Codesignal im Signaltelegram angewählt. In gleicher Weise könnte das Rückmeldetelegramm das für das jeweilige Fördermittel kennzeichnende Codesignal enthalten, um in der ortsfesten Sende- und Empfangsstation feststellen zu können, von welchem Fördermittel das empfangene Rückmeldetelegramm stammt. Dies ergäbe aber einen höheren Aufwand und würde darüber hinaus die Übertragungszeit erhöhen, weil das Rückmeldetelegramm um die Fördermittelkennung länger sein müßte. In einer weiteren Ausgestaltung der Erfindung kann nun dieser Aufwand dadurch vermieden werden, daß die mit je einer Rückmeldeschleife verbundenen Empfangseinheiten der Sende- und Empfangsstation an einer Auswerteschaltung angeschlossen sind, die mit einem vom Sendeteil gesteuerten Kennungsgeber verbunden ist und die vom Kennungsgeber in der gleichen, aber zeitverschobenen Reihenfolge der senderseitigen Fördermittelanwahl zur Verfügung gestellten Kennungen den in den Empfangseinheiten von den angewählten Fördermitteln empfangenen Rückmeldetelegrammen zuordnet. Wird also eine starre Kopplung zwischen dem von einem Fördermittel empfangenen Signaltelegramm und dem Rückmeldetelegramm sichergestellt, so braucht auf Grund des vorgegebenen Zeitunterschiedes zwischen dem Empfang des Signaltelegrammes und dem Absenden des hiefür erforderlichen Rückmeldetelegrammes die Fördermittelkennung nicht im Rückmeldetelegramm codiert zu sein. Es genügt vielmehr, die Kennung, die vom Sendeteil in Form eines Codesignales an die Sendeschleife abgegeben wird, der Auswerteschaltung mit einer entsprechenden zeitlichen Verschiebung zur Verfügung zu stellen, damit das in einer der Empfangseinheiten über eine Rückmeldeschleife empfangene Rückmeldetelegramm der richtigen Kennung zugeordnet werden kann. Ob hiefür der dem Sendeteil der Sende- und Empfangsstation zugehörige Kennungsgeber über ein Verzögerungsglied an die Auswerteschaltung angeschlossen ist oder die Auswerteschaltung einen eigenen Kennungsgeber aufweist, der vom Sendeteil her getaktet wird, ist nicht erheblich. Obwohl grundsätzlich eine willkürliche Anwahl der einzelnen Fördermittel von der Sende- und Empfangsstation aus möglich wäre, kann eine zyklische Anwahl aller Fördermittel nacheinander eine nicht unerhebliche Vereinfachung bringen. Eine solche zyklische Anwahl empfiehlt sich auch deshalb, weil die Zykluszeit gering gehalten werden kann.

Je nach der Art und dem Einsatz der Fördermittel kann es von Vorteil sein, entweder die einzelnen Rückmeldeschleifen oder die einzelnen Fördermittel zu überwachen. Sollen vor allem die Rückmeldeschleifen und damit die diesen Rückmeldeschleifen zugehörenden Fahrbahnabschnitte bezüglich der sich in ihrem Bereich befindlichen Fördermittel erfaßt werden, so kann die Auswerteschaltung vorteilhaft für jede Empfangseinheit einen an den Kennungsgeber angeschlossenen Speicher, dessen Steuereingang für den Einlesebefehl mit einem von der zugehörigen Empfangseinheit ansteuerbaren Steuerbefehlgeber verbunden ist, und eine Abfrageeinheit aufweisen, die sowohl an die Steuereingänge für den Auslesebefehl der Speicher für die Kennung als auch an die Auslese-Steuereingänge der den Empfangseinheiten zugeordneten Speicher für die Rückmeldetelegramme angeschlossen ist. Da alle Speicher für die Fördermittelkennung eingangsseitig am Ausgang des Kennungsgebers angeschlossen sind und daher allen diesen Speichern die Kennung des jeweils sendenden Fördermittels angeboten wird, kann über einen Einlesebefehl, der durch die das Rückmeldetelegramm empfangende Empfangseinheit ausgelöst wird, der dieser Empfangseinheit zugeordnete Speicher aktiviert werden, so daß nur in diesen Speicher die allen Speichern angebotene Fördermittelkennung eingelesen wird. Mit Hilfe einer entsprechenden Abfrageeinheit kann dann jeder Speicher angewählt und ausgelesen werden, wobei die Kennung des sich im Bereich der angewählten Rückmeldeschleife befindlichen Fördermittels und dessen Rückmeldetelegramm erhalten wird, das ebenfalls über die Abfrageeinheit aus dem Rückmeldetelegramm-Speicher der angewählten Empfangseinheit ausgelesen wird. Nach einem Anwahlzyklus der Fördermittel über den Sendeteil sind somit die Kennungen aller Fördermittel in den den einzelnen Fahrbahnabschnitten über die Rückmeldeschleifen zugeordneten Speichern abfragbar abgespeichert.

Eine Konstruktionsvariante besteht darin, daß die Auswerteschaltung eine der Fördermittelanzahl entsprechende Anzahl von Speichern für die empfangenen Rückmeldetelegramme aufweist, daß für die einzelnen Empfangseinheiten jeweils von der zugehörigen Empfangseinheit ansteuerbare Ausgabeeinheiten für ein bestimmtes, diese Empfangseinheiten kennzeichnendes Codesignal vorgesehen sind, daß den Rückmeldetelegramm-Speichern je ein mit den Ausgabeeinheiten verbundener Codesignal-Speicher zugeteilt ist und daß die Steuereingänge für den Einlesebefehl sowohl der Codesignal-Speicher als auch der Rückmeldetelegramm-Speicher im Takt der Kennungsausgabe nacheinander an den Kennungsgeber angeschlossen sind. Mit dieser Konstruktionsvariante werden die einzelnen Fördermittel angewählt und es wird abgefragt, im Bereich welcher Rückmeldeschleife sich das angewählte Fördermittel befindet. Die für die einzelnen Empfangseinheiten bzw. Rückmeldeschleifen kennzeichnenden Codesignale, die auf Grund eines empfangenen Rückmeldetelegrammes von der betroffenen Empfangseinheit an alle hiefür vorgesehenen Speicher weitergegeben werden, werden nur in dem Speicher abgespeichert, an dem ein vom Kennungsgeber abgeleiteter Einlesebefehl anliegt. Wegen der zyklischen Beaufschlagung der Speicher mit den Einlesebefehlen ist jeder Speicher eindeutig einem bestimmten Fördermittel zugeteilt. Der Inhalt der einem Fördermittel zugehörigen Speicher für das Rückmeldetelegramm und für das Codesignal der das Rückmeldetelegramm empfangenden Empfangseinheit bezieht sich folglich auf dieses Fördermittel, do daß durch das Abfragen der einem bestimmten Fördermittel zugeteilten Speicher die Lage und die Rückmeldung dieses Fördermittels erhalten werden kann.

Um Fehler bei der Übertragung vermeiden zu können, kann in weiterer Ausbildung der Erfindung jede Empfangseinheit an eine den Empfang eines Rückmeldetelegrammes innerhalb einer vorbestimmten Zeit überprüfende Überwachungseinrichtung angeschlossen sein, die mit einem Löscheingang der Rückmeldetelegramm-Speicher in Verbindung steht. Diese Überwachungseinrichtung ist auf die starre zeitliche Kopplung zwischen den von den Fördermitteln empfangenen Signaltelegrammen und den daraufhin gesendeten Rückmeldetelegrammen abgestellt und zeigt an, wenn kein Rückmeldetelegramm innerhalb der vorbestimmten Zeit empfangen wird. Dies bedeutet, daß entweder sich kein Fördermittel im Bereich der zugehörigen Rückmeldeschleife befindet oder eine fehlerhafte Übertragung vorliegt. In beiden Fällen ist der zugehörige Rückmeldetelegramm-Speicher zu löschen.

Da auf Grund einer zyklischen Anwahl der Fördermittel nacheinander und der festen zeitlichen Zuordnung der Rückmeldetelegramme zu den Signaltelegrammen des Sendeteiles der ortsfesten Station stets nur ein Rückmeldetelegramm empfangen werden kann, kann das gleichzeitige Empfangen von mehr als einem Rückmeldetelegramm oder das Ausbleiben eines Rückmeldetelegrammes zur Fehleranzeige ausgenützt werden. Zu diesem Zweck kann die Auswerteschaltung eine Empfangsüberwachung umfassen, deren Eingang über ein ODER-Gatter an alle Empfangseinheiten der Sende- und Empfangsstation und deren Ausgang an eine Fehlermeldung angeschlossen sind. Tritt am ODER-Gatter kein den Empfang eines Rückmeldetelegrammes anzeigendes Signal auf oder liegen zwei oder mehrere solcher Signale an, so unterbleibt die Empfangsmeldung an die Empfangsüberwachung und es wird ein Fehler gemeldet. Diese Fehlermeldung kann in vorteilhafter Weise ausgenützt werden, um beispielsweise die Speicher der einzelnen Empfangseinheiten für die Fördermittelkennung zu löschen, wenn z. B. über zwei Empfangseinheiten Rückmeldetelegramme erhalten werden. Hiefür sind die Kennung-Speicher mit ihren Löscheingängen jeweils über ein UND-Gatter einerseits an dem invertierten Ausgang der Empfangsüberwachung und anderseits an den jeweils zugehörigen Überwachungseinrichtungen der Empfangseinheiten angeschlossen. Wegen der Invertierung des Ausganges der Empfangsüberwachung liegt am Eingang des UND-Gatters bei einer Fehlermeldung das keiner Fehlermeldung entsprechende Signal an, das dem Ausgangssignal der Überwachungseinrichtung der Empfangseinheit entspricht, die ein Rückmeldetelegramm ordnungsgemäß empfängt. Das in den zugehörigen Speicher eingelesene Kennungssignal wird folglich gelöscht, weil die übergeordnete Empfangsüberwachung einen Fehler gemeldet hat.

Sind die Steuereingänge für den Einlesebefehl der Speicher für die Fördermittelkennung jeweils über ein ODER-Gatter einerseits am zugehörigen Steuerbefehlgeber und anderseits an einem UND-Gatter angeschlossen, das jeweils mit der zugehörigen Überwachungseinrichtung der Empfangseinheit und mit dem Ausgang der Empfangsüberwachung verbunden ist, so kann der von den Überwachungseinrichtungen der Empfangseinheiten ausgegebene Löschbefehl zum Einspeichern der Fördermittelkennung verwendet werden, bei der der Fehler auftritt. Es ist somit jenes Fördermittel erfaßbar, das die fehlerhafte Übertragung verursacht.

In ähnlicher Weise kann bei einer Fehleranzeige verhindert werden, daß empfangene Rückmeldetelegramme und das diesen Empfangseinheiten zugeordnete Codesignal in den hiefür vorgesehenen, jedem Fördermittel zugeordneten Speichern abgespeichert werden. Sind nämlich die Steuereingänge für den Einlesebefehl der Rückmeldetelegramm-Speicher und der Codesignal-Speicher über ein UND-Gatter einerseits an den invertierten Ausgang der Empfangsüberwachung und anderseits an den zugehörigen Ausgang des für jede Kennung einen gesonderten Ausgang aufweisenden Kennungsgebers angeschlossen, so kann der Einlese-Steuereingang der Speicher nur mit einem Steuerbefehl beaufschlagt werden, wenn die Empfangsüberwachung keinen fehlerhaften Empfang feststellt. Es liegen in einem solchen Fall an dem UND-Gatter der über den Kennungsgeber angewählten Speicher wegen des invertierten Ausganges der Empfangsüberwachung Steuersignale an allen Eingängen an.

Bei einer fehlerhaften Übertragung kann das die Fehlermeldung bewirkende Ausgangssignal der Empfangsüberwachung zur Anzeige des den Übertragungsfehler auslösenden Fördermittels ausgenützt werden, indem der Ausgang der Empfangsüberwachung mit dem Einlese-Steuereingang eines an den Kennungsgeber angeschlossenen Kennung-Speichers verbunden wird.

In der Zeichnung ist der Erfindungsgegenstand in einem Ausführungsbeispiel schematisch dargestellt. Es zeigen

Figur 1 eine erfindungsgemäße Anlage zur induktiven Übertragung von Signaltelegrammen zwischen einer ortsfesten Sende- und Empfangsstation und einzelnen Fördermitteln in einem vereinfachten Blockschaltbild,

Figur 2 die Anordnung der Sendeschleife in bezug auf eine Rückmeldeschleife im Schnitt,

Figur 3 den Sendeteil der ortsfesten Sende- und Empfangsstation in einem Blockschaltbild,

Figur 4 den Sender und Empfänger eines Fördermittels in einem Blockschaltbild,

Figur 5 ein Blockschaltbild einer möglichen Ausführungsform des Empfangsteiles der Sende- und Empfangsstation und

Figur 6 eine der Fig. 5 entsprechende Darstellung einer Konstruktionsvariante des Empfangsteiles.

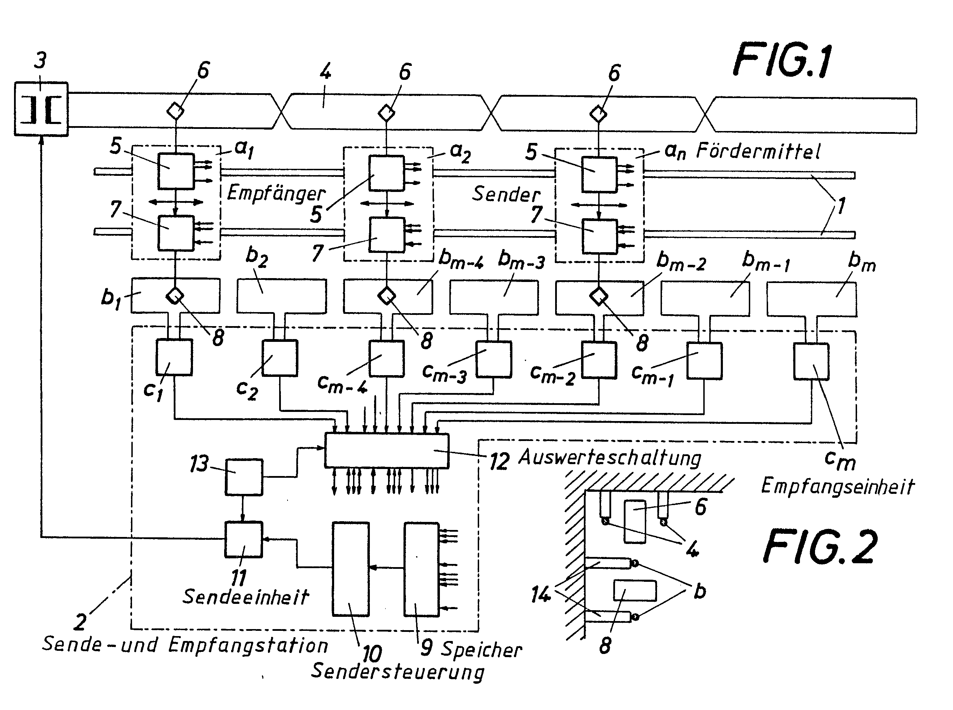

Bei der in Fig. 1 angedeuteten Fördereinrichtung beispielsweise einer Beizanlage müssen die das Beizgut aufnehmenden Fördermittel a auf einer Fahrbahn 1 bewegt werden. Zur Steuerung der Fördermittel a ist eine ortsfeste Sende- und Empfangsstation 2 vorgesehen, die die zu übertragenden Steuerbefehle in Form von Signaltelegrammen über eine Schleifeneinspeisung 3 an eine sich entlang der Fahrbahn 1 erstreckende, als Sendeschleife dienende Induktionsschleife 4 weiterleitet. Zum Empfang dieser Signaltelegramme weisen die Fördermittel a jeweils einen Empfänger 5 mit einer Empfangsantenne 6 auf, in der über die magnetische Koppelung mit der Induktionsschleife 4 Spannungen mit einer dem Signaltelegramm entsprechenden Frequenz induziert werden. Nach dem Empfang eines Signaltelegrammes aktivieren die Empfänger 5 jeweils einen Sender 7, der mit einem vorgegebenen zeitlichen Abstand vom empfangenen Signal ein Rückmeldetelegramm abgibt. Zur Übertragung dieses Rückmeldetelegrammes sind entlang der Fahrbahn 1 Rückmeldeschleifen b vorgesehen, denen in der Sende- und Empfangsstation 2 jeweils eine gesonderte Empfangseinheit c zugeordnet ist. Da die Anordnung so getroffen ist, daß die Länge der Fördermittel a der Länge der Rückmeldeschleifen b entspricht, kann sich im Bereich einer Rückmeldeschleife b lediglich die Sendeantenne 8 eines einzigen Fördermittels a befinden, so daß über eine Rückmeldeschleife b nur jeweils ein Rückmeldetelegramm empfangen werden kann. Wird demnach von einer Empfangseinheit c ein Rückmeldetelegramm erhalten, so bedeutet dies, daß sich das das Rückmeldetelegramm sendende Fördermittel a im Fahrbahnbereich der der empfangenden Empfangseinheit c zugehörigen Rückmeldeschleife b befindet. Bei einer entsprechenden Unterscheidung der einzelnen Fördermittel kann somit die jeweilige Lage der Fördermittel a erfaßt werden. Den Fördermitteln a muß zu diesem Zweck eine Kennung zugeordnet werden, die beispielsweise aus einer Ordnungszahl bestehen kann. Das n-te Fördermittel besitzt folglich die Ordnungszahl n und wird als Fördermittel an bezeichnet.

Damit nun von der Sende- und Empfangsstation 2 jedes Fördermittel für sich angewählt werden kann, sind die Empfänger 5 so ausgebildet, daß sie nur auf ein bestimmtes, der Kennung des jeweiligen Fördermittels entsprechendes Codesignal ansprechen. Die an die einzelnen Fördermittel a zu übertragenden Signaltelegramme müssen daher aus zwei Teilen aufgebaut sein, nämlich aus einem der Fördermittelkennung entsprechenden Teil und einem Steuersignalteil. Ist jedes Telegramm aus mehreren Schwingungspaketen aufgebaut, deren Frequenz sich jeweils von der Frequenz des vorhergehenden Schwingungspaketes unterscheidet, so kann mit wenigen Frequenzen und einer geringen Anzahl von Schwingungspaketen eine Vielzahl von Codewörtern gewonnen werden, wobei zu bedenken ist, daß auf Grund des zweiteiligen Telegrammaufbaues jedes Signaltelegramm an die einzelnen Fördermittel zwei Codewörter umfassen muß. Um eine zyklische Anwahl der einzelnen Fördermittel mit einer kurzen Zykluszeit sicherstellen zu können, werden die zu übertragenden Signaltelegramm gegebenenfalls nach einer Codierung in einen Signaltelegramm-Speicher 9 eingelesen, aus dem sie in der vorgesehenen Reihenfolge von einer Sendersteuerung 10 abgefragt und an eine Sendeeinheit 11 weitergegeben werden.

Nach dem Empfang der gesendeten Signaltelegramme durch die Empfänger 5 der jeweiligen Fördermittel werden diese Telegramme in den Fördermitteln decodiert und abgespeichert, wonach über den Sender 7 ein Rückmeldetelegramm abgesendet wird. Dieses Rückmeldetelegramm kann in gleicher Weise aus zwei Codewörtern aufgebaut sein. Da aber jedes Fördermittel a von der Sende- und Empfangsstation 2 zyklisch angesprochen wird und nach jedem Empfang eine Rückmeldungabsetzt, ist der Rückmeldezyklus zeitlich starr mit dem Sendezyklus gekoppelt, so daß das Codewort für die Fördermittelkennung im Rückmeldetelegramm entfallen kann, wenn über eine Auswerteschaltung 12, die an alle Empfangseinheiten c angeschlossen ist, jedes Rückmeldetelegramm der Kennung des dieses Telegramm absetzenden Fördermittels zugeordnet werden kann. Der Auswerteschaltung 12 braucht zu diesem Zweck nur die Kennung in der Reihenfolge des Sendezyklus, jedoch um die Zeitspanne zwischen dem Empfang des Telegrammes und dem Absetzen eines Rückmeldetelegrammes versetzt, vorgegeben zu werden. Zur Wahrung der zeitlichen Abhängigkeit zwischen dem Sende- und dem Empfangsteil der ortsfesten Sende- und Empfangsstation ist ein Taktgeber 13 vorgesehen, über den jeweils Kennungsgeber getaktet werden können.

Um ein Übersprechen zwischen der Sendeschleife 4 und den Rückmeldeschleifen b zu vermeiden, sind diese Schleifen jeweils in zueinander senkrechten Ebenen mittig angeordnet, wie dies in Fig. 2 dargestellt ist. Die an Trägern 14 befestigten Rückmeldeschleifen b liegen in einer zu Ebene der Sendeschleife 4 senkrechten Ebene, die durch Längsachse der Sendeschleife geht. Analog dazu sind die Empfangs- und Sendeantennen 6 und 8 angeordnet, so daß auf Grund der Lagen zueinander keine gegenseitige Beeinflussung zu befürchten ist.

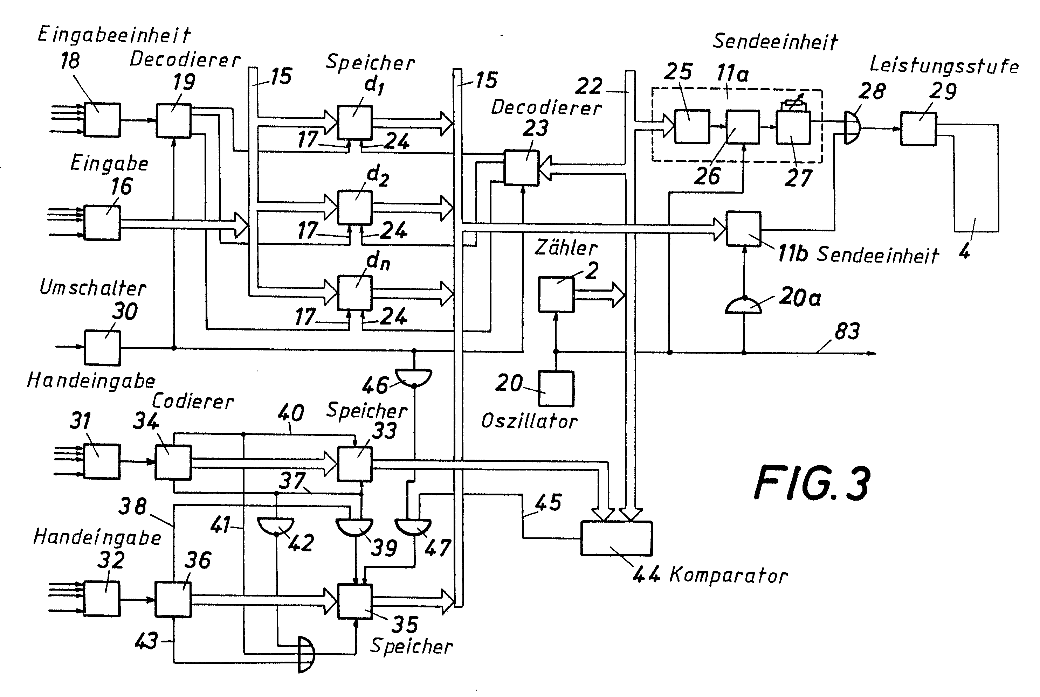

Wie in Fig. 3 dargestellt ist, besitzt der Sendeteil der Sende- und Empfangsstation 2 für jedes Fördermittel einen eigenen Steuersignal-Speicher d, der über einen Steuersignalbus 15 mit einer Steuersignaleingabe 16 verbunden ist. Die Steuereingänge 17 für den Einlesebefehl dieser Speicher d werden von einer Eingabeeinheit 18 für die Fördermittelkennungen beaufschlagt, wobei ein Decodierer 19 zwischengeschaltet sein muß, wenn die Fördermittelkennungen aus einer vorgeordneten Steuerung codiert erhalten werden. Das Steuersignal für das Fördermittel $a_n$ wird demnach im zugehörigen Speicher $d_n$ abgelegt, wenn über die Eingabe 18 der entsprechende Einlesebefehl vorliegt.

Um nun die Speicher $d_1$ bis $d_n$ nacheinander zyklisch auslesen zu können, ist ein Kennungsgeber vorgesehen, der im Falle des Ausführungsbeispieles aus einem an einen Oszillator 20 angeschlossenen Ringzähler 21 besteht. Die vom Oszillator 20 erzeugten Taktimpulse werden vom Ringzähler 21 gezählt, so daß am Ausgang des Ringzählers 21 mit jedem Takt ein anderes Codesignal zur Verfügung steht. Diese zyklisch erzeugten Codesignale werden über einen Datenbus 22 einerseits der Sendeeinheit 11a für das der Kennung entsprechende Codiersignal und anderseits über einen Decodierer 23 an die einzelnen Auslese-Steuereingänge der Steuersignal-Speicher d weitergeleitet. Diese Speicher d werden daher nacheinander ausgelesen und die ausgelesenen Steuersignale über den Datenbus 15 an eine Sendeeinheit 11b weitergegeben. Die über die Datenbusse 15 und 22 an die Stendeeinheiten 11a und 11b anliegenden Signale werden über einen Codierer 25 einer Steuerung 26 zugeführt, die gemäß dem durch das Codewort abgerufenen Ablaufprogramm einen Sendeoszillator 27 steuert, um das zu übertragende Signaltelegramm zu erhalten. Die Frequenzen und die Anzahl der Schwingungen je Schwingungspaket können eingestellt werden. Der abwechselnde Einsatz der beiden Sendeeinheiten 11a und 11b wird vom Oszillator 20 getaktet, indem die Steuerung 26 der Sendeeinheit 11a direkt und die entsprechende steuerung der Sendeeinheit 11b über einen Inverter 20a mit dem Ausgang des Oszillators 20 verbunden ist. Die Ausgänge der Sendeeinheiten 11a und 11b werden über ein ODER-Gatter 28 einer Leistungsstufe 29 zugeführt, die die Sendeschleife 4 speist.

Damit auch von Hand aus Steuersignale den einzelnen Fördermitteln $a_1$ bis $a_n$ vorgegeben werden können, ist ein Umschalter 30 vorgesehen, über den die das Ein- und Auslesen der Speicher $d_1$ bis $d_n$ bewirkenden Decodierer 19 und 23 gesperrt werden können. Über die Handeingabe 31 für die Fördermittelkennung und die Handeingabe 32 für die Steuersignale können wiederum die Fördermittelkennung und das Steuersignal abgespeichert werden. Zu diesem Zweck sind ein Speicher 33 für die über einen Codierer 34 eingebbare Fördermittelkennung und ein Speicher 35 für das ebenfalls über einen Codierer 36 vorgebbare Steuersignal vorgesehen. Dabei kann ein Steuersignal nur dann in den Speicher 35 eingelesen werden, wenn auch eine Fördermittelkennung eingegeben wird. Die Steuersignalleitung 37 für den Einlesebefehl des Speichers 33 ist nämlich mit der Steuerleitung 38 des Codierers 36 über ein UND-Gatter 39 an den einlese-Steuereingang des Speichers 35 angelegt, so daß an den Speicher 35 nur ein Einlesebefehl übertragen werden kann, wenn beide Steuerleitungen 37 und 38 beaufschlagt sind. Wird die Fördermittelkennung über die Steuerleitung 40 gelöscht, so wird der Speicher 35 über die Zweigleitung 41 ebenfalls gelöscht. Eine Löschung des Speichers 35 wird ebenfalls bewirkt, wenn keine Fördermittelkennung eingespeichert wird, und zwar über den an die Einlese-Steuerleitung 37 angeschlossenen Inverter 42. Eine von der Speicherung des Speichers 33 unabhängige Löschung des Speichers 35 ist über die Steuerleitung 43 ebenfalls möglich.

Die im Speicher 33 abgelegte Fördermittelkennung wird einem Komparator 44 zugeführt, der die von Hand eingespeicherte Fördermittelkennung mit der jeweils am Datenbus 22 liegenden Fördermittelkennung vergleicht und einen Auslesebefehl an den Speicher 35 für die Steuersignale über die Leitung 45 abgibt. Dies ist allerdings nur möglich, wenn der Umschalter auf Handbetrieb gestellt ist. Der Ausgang des Umschalters 30 ist nämlich über einen Inverter 46 an ein UND-Gatter 47 angeschlossen, an dem auch die Steuerleitung 45 des Komparators 44 anliegt. Wird der Speicher 35 ausgelesen, so wird das von Hand aus eingegebene Steuersignal über den Datenbus 15 an die Sendeeinheit 11b weitergeleitet und in Form eines Signaltelegrammes an die Sendeschleife 4 abgesetzt.

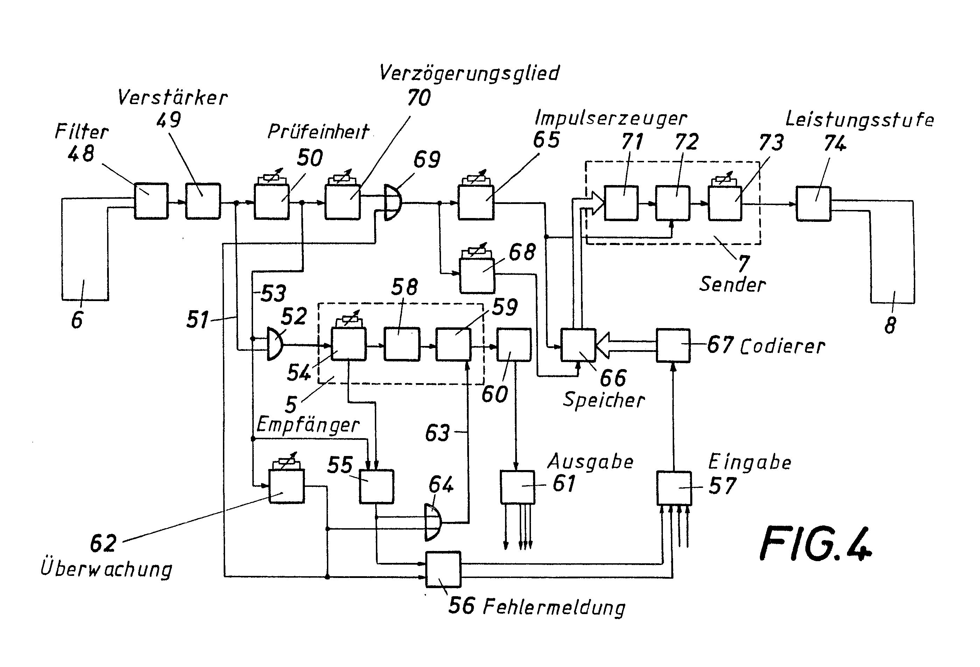

Gemäß Fig. 4 wird das in die Sendeschleife 4 abgesetzte Signaltelegramm von den Empfangsantennen 6 der einzelnen Fördermittel a aufgenommen und über ein Frequenzfilter 48 und einen Verstärker 49 einer Prüfeinheit 50 zugeleitet, die überprüft, ob das aufgenommene Signaltelegramm das der Kennung des jeweiligen Fördermittels entsprechende Codesignal enthält. Ist dies der Fall, so schaltet die Prüfeinheit 50 den Signalweg 51 zum Empfänger 5 des Fördermittels durch, weil das in den Signalweg 51 eingeschaltete UND-Gatter 52 von der Prüfeinheit 50 über die Leitung 53 mit einem Steuersignal beaufschlagt wird. Eine weitere Prüfeinheit 54 in der Sendeeinheit 5 überprüft, ob das empfangene Steuersignal möglich und vollständig ist, und beaufschlagt bei einer Fehlererkennung eine Überwachungseinrichtung 55 für die Steuersignale. Da der Überwachungseinrichtung 55 über die Leitung 53 zusätzlich gemeldet wird, ob die Fördermittelkennung erkannt wurde, kann über die Überwachungseinrichtung 55 das Nichterkennen eines Steuersignales als Fehler an die Fehlermeldung 56 weitergegeben werden, die mit der eingabeeinheit 57 für den Sender 7 des Fördermittels verbunden ist, so daß die Fehlermeldung auch in der Sende- und Empfangsstation 2 empfangen werden kann.

Wird von der Prüfeinheit 54 ein Steuersignal erkannt, so wird das empfangene Signal über einen Decodierer 58 einem Signalspeicher 59 zugeführt und kann über einen Decodierer 60 an eine Ausgabeeinheit 61 ausgelesen werden.

Da auf Grund der zyklischen Anwahl der einzelnen Fördermittel jedes Fördermittel in einem Sendezyklus angesprochen werden muß, kann eine Zyklusüberwachung 62 vorgesehen werden, die mit dem Ausgangssignal der Prüfeinheit 50 beaufschlagt wird, um festzustellen, ob innerhalb der vorgegebenen Zykluszeit eine Fördermittelkennung tatsächlich erkannt wurde. Liegt innerhalb einer Zykluszeit kein Steuersignal von der Prüfeinheit 50 vor, so wird einerseits die Fehlermeldung 56 beaufschlagt und anderseits der Signalspeicher 59 über die Steuerleitung 63 gelöscht. Eine Löschung dieses Speichers erfolgt auch, wenn ein empfangenes Steuersignal nicht erkannt wird. Die Steuerleitung 63 ist zu diesem Zweck über ein ODER-Gatter 64 sowohl mit der Zyklusüberwachung 62 als auch mit der Überwachungseinrichtung 55 für die Steuersignale verbunden.

Damit in einem bestimmten zeitlichen Abstand nach dem Empfang eines Signaltelegrammes ein Rückmeldetelegramm abgesetzt werden kann, wird von der Prüfeinheit 50 nach dem Empfang eines Telegrammes ein Steuersignal an eine Rückmeldeimpulserzeugung 65 abgegeben, die nach einer bestimmten, einstellbaren Zeit einen Auslesebefehl an einen Rückmeldespeicher 66 absetzt und den Sender 7 aktiviert. Die Einspeicherung der über die Eingabeeinheit 57 vorgeschriebenen Rückmeldung in den Speicher 66 über einen Codierer 67 wird von einem Verzögerungsglied 68 gesteuert, das für die Einspeicherung der jeweils zuletzt in die Eingabeeinheit 57 eingegebenen Meldungen sorgt.

Spricht die Zyklusüberwachung 62 an, so muß dafür gesorgt werden, daß die entsprechende Fehlermeldung ebenfalls übertragen wird. Die Rückmeldeimpulserzeugung 65 ist daher auch mit dem Ausgang der Zyklusüberwachung 62 verbunden, und zwar über ein ODER-Gatter 69, an dem der Ausgang der Prüfeinheit 50 über ein Verzögerungsglied 70 anliegt. Dieses Verzögerungsglied 70 gewährleistet, daß die Rückmeldeimpulserzeugung bei fehlerfreiem Betrieb im gleichen Zeitpunkt erfolgt, wie beim Ansprechen der Zyklusüberwachung 62.

Nach der Aktivierung des Senders 7 und dem Auslesen des Speichers 66 wird über einen Codierer 71 eine Steuerschaltung 72 angesteuert, die die codierte Rückmeldung mit Hilfe eines Sendeoszillators 73 in ein entsprechendes Frequenzpaket umwandelt, das über eine Leistungsstufe 74 der Sendeantenne 8 zugeführt wird.

Da die Fördermittel $a_1$ bis $a_n$ ihr Rückmeldetelegramm jeweils nur in eine der vorgesehenen Rückmeldeschleifen b absetzen können, kann über die an die Rückmeldeschleifen b angeschlossenen Empfangseinheiten c die augenblickliche Lage der Fördermittel erfaßt werden. Bei der Auswertung der empfangenen Rückmeldetelegramme muß hiefür lediglich festgehalten werden, über welche Empfangseinheit das jeweilige Rückmeldetelegramm erhalten wurde. Zu diesem Zweck werden den vorgesehenen m Rückmeldeschleifen und Empfangseinheiten die Ordnungszahlen 1 bis m zugeordnet, so daß sich für die Rückmeldeschleifen und die zugehörigen Empfangseinheiten die Bezeichnung $b_1$ bis $b_m$ und $c_1$ bis $c_m$ ergibt. Die von den einzelnen Rückmeldeschleifen b übertragenen Rückmeldetelegramme werden der zugehörigen Empfangseinheit c jeweils über ein Frequenzfilter 75 und einen Verstärker 76 zugeführt, um zunächst in einer Prüfeinheit 77 auf Fehler überprüft zu werden. Erkennt die Prüfeinheit 77 keinen Fehler, so wird das empfangene Telegramm über einen Decodierer 78 einem Signalspeicher 79 zugeleitet. Gleichzeitig wird vom empfangenen Telegramm ein Steuersignalgeber 80 beaufschlagt, der einer den einzelnen Empfangseinheiten $c_1$ bis $c_m$ zugeordneten Überwachungseinrichtung 81 den Empfang eines Rückmeldetelegrammes meldet. Tritt diese Meldung nicht innerhalb der vorgegebenen Zykluszeit auf, so wird der Signalspeicher 79 über die Überwachungseinrichtung 81 gelöscht.

Damit die in den einzelnen Empfangseinheiten $c_1$ bis $c_m$ empfangenen Rückmeldetelegramme den sie sendenden Fördermitteln zugeordnet werden können, ohne diese Rückmeldetelegramme mit einem entsprechenden Codesignal zu versehen, werden die Fördermittelkennungen den Empfangseinheiten $c_1$ bis $c_m$ in vorteilhafter Weise über einen Kennungsgeber vorgegeben. Dieser Kennungsgeber besteht aus einem Ringzähler 82, der über eine Taktteilung 82 vom Oszillator 20 des Sendeteiles der Sende- und Empfangsstation 2 mit Zählimpulsen versorgt wird. Die am Ausgang des Ringzählers nach jedem Takt erhaltenen Fördermittelkennungen müssen eine zeitliche Versetzung gegenüber dem Sendezyklus aufweisen, um zugleich mit dem von einem Fördermittel abgegebenen Rückmeldetelegramm der Auswerteschaltung 12 zur Verfügung gestellt werden können. Diese zeitliche Versetzung der Fördermittelkennung kann in einfacher Weise über ein Schieberegister 84 erreicht werden, wobei die Verzögerungszeit eingestellt werden kann.

Auf Grund der starren zeitlichen Kopplung des Sendezyklus und des Rückmeldezyklus muß je Zyklus eine Rückmeldung erfolgen. Dieser Sachverhalt bietet die zusätzliche Möglichkeit, über eine Empfängerüberwachung 85 ein Steuersignal für eine Fehlermeldung 86 zu erzeugen. Über ein ODER-Gatter 87 werden dabei der Empfängerüberwachung 85 alle empfangenen Rückmeldetelegramme angezeigt. Wird innerhalb einer Zykluszeit von einem Fördermittel kein Telegramm erhalten oder treten gleichzeitig zwei oder mehr Rückmeldetelegramme auf, so wird das Gatter 87 gesperrt und ein Fehlersignal erzeugt.

Damit nun nicht zum Einsatz kommende Fördermittel keine Fehlermeldung auslösen können, ist für die fehlenden Fördermittel ein Signalgeber 88 vorgesehen, der über den Ringzähler 82 und einen Decodierer 89 zyklisch angestoßen wird und für das fehlende Fördermittel ein Empfangssignal an das ODER-Gatter 87 weitergibt, so daß der Empfangsüberwachung 85 der richtige Empfang eines Rückmeldetelegrammes von dem fehlenden Fördermittel vorgetäuscht wird.

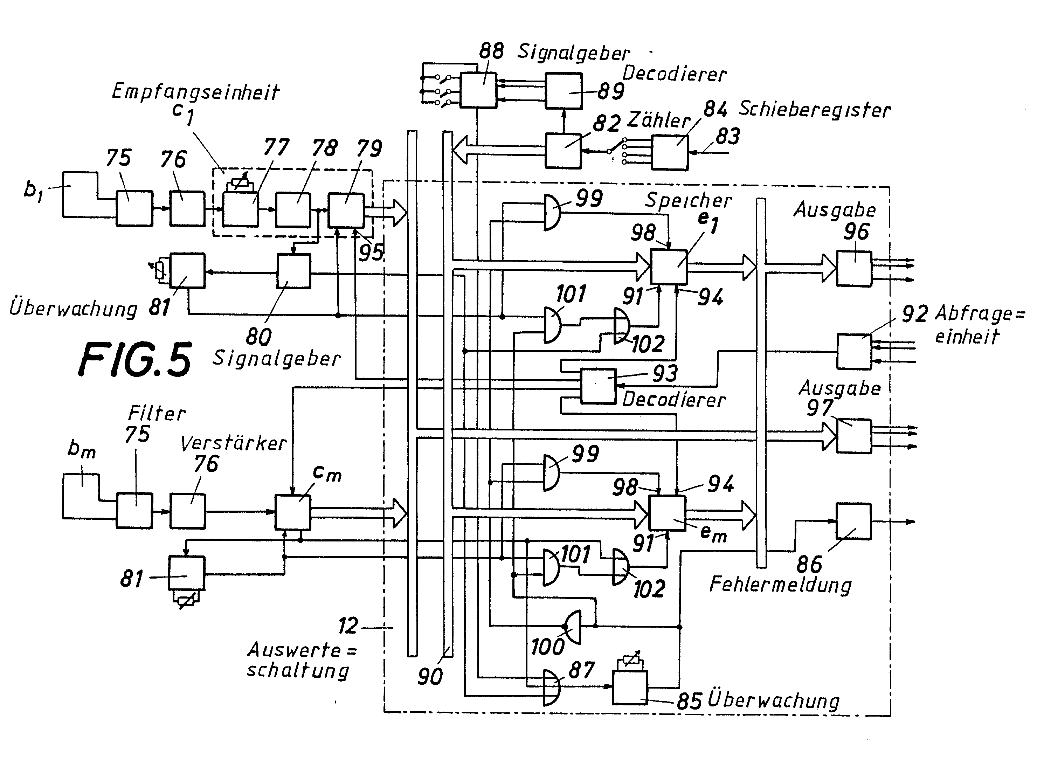

Damit stets angegeben werden kann, welches Fördermittel a sich im Bereich einer bestimmten Rückmeldeschleife b befindet, weist die Auswerteschaltung 12 gemäß Fig. 5 für jede Empfangseinheit $c_1$ bis $c_m$ einen zugeordneten Speicher e für die Fördermittelkennung auf, wobei diese Speicher e mit den Ordnungszahlen der zugehörigen Empfangseinheiten bezeichnet sind. Der Speicher $e_m$ gehört demnach zur Empfangseinheit $c_m$. Über einen Datenbus 90 liegen die am Ausgang des Ringzählers 82 erhaltenen Fördermittelkennungen an den Eingängen der Speicher $e_1$ bis $e_m$ an und werden in diesen Speichern abgelegt, wenn die Steuereingänge 91 für den Einlesebefehl über den Steuerbefehlgeber 80 mit einem Einlesebefehl beaufschlagt werden. Da der zeitliche Abstand zwischen dem Sendezyklus und dem Rückmeldezyklus der zeitlichen Verzögerung der Ausgabe der Fördermittelkennung für die Auswerteschaltung entspricht, liegt an den Speichern $e_1$ bis $e_m$ jeweils die Fördermittelkennung des Fördermittels an, dessen Rückmeldetelegramm in einer der Empfangseinheiten $c_1$ bis $c_m$ empfangen wird. Nach einem Sendezyklus, in dem jedes Fördermittel einmal angesprochen wird, müssen demnach die Fördermittelkennungen aller Fördermittel in den Speichern $e_1$ bis $e_m$

abgespeichert sein, die der Rückmeldeschleife b zugeordnet sind, in deren Bereich sich das Fördermittel gerade befindet. Wird über eine Abfrageeinheit 92 über einen Decodierer 93 einer der Fördermittelkennung-Speicher $e_1$ bis $e_m$ mit dem zugehörigen Signalspeicher 79 in der Empfangseinheit c angewählt, wobei diesen angewählten Speichern ein Auslesebefehl über die Auslese-Steuereingänge 94 und 95 übermittelt wird, so kann an den Ausgabeeinheiten 96 und 97 einerseits abgelesen werden, welches Fördermittel sich im Bereich der angewählten Rückmeldeschleife befindet, und anderseits das von dem angezeigten Fördermittel empfangene Rückmeldetelegramm erhalten werden.

Zeigt die Überwachungseinrichtung 81 einer Empfangseinheit c an, daß innerhalb eines Sendezyklus kein Rückmeldetelegramm erhalten wurde, so wird neben dem Signalspeicher 79 auch der zugehörige Speicher e für die Fördermittelkennung gelöscht, wenn die Empfangsüberwachung nicht anspricht. Die Löscheingänge 98 der Kennung-Speicher e sind zu diesem Zweck über ein UND-Gatter 99 einerseits an der Überwachungseinrichtung 81 der jeweils zugehörigen Empfangseinheit c und anderseits über einen Inverter 100 am Ausgang der Empfangsüberwachung 85 angeschlossen. Wird jedoch von der Empfangsüberwachung 85 ein Fehler angezeigt, so wird der Löschbefehl der Überwachungseinrichtung 81 zum Abspeichern der Fördermittelkennung des Fördermittels ausgenützt, bei dem die Fehlermeldung erfolgt. Dies kann beispielsweise dadurch erreicht werden, daß über ein sowohl mit der Überwachungseinrichtung 81 der jeweiligen Empfangseinheit c als auch mit dem Ausgang der Empfangsüberwachung 85 verbundenes UND-Gatter 101 ein Steuersignal erzeugt wird, das über ein ODER-Gatter 102 an den Einlese-Steuereingang 91 gelegt wird. Der Einlesebefehl vom Befehlgeber 80 wird ebenfalls über das ODER-Gatter 102 geführt.

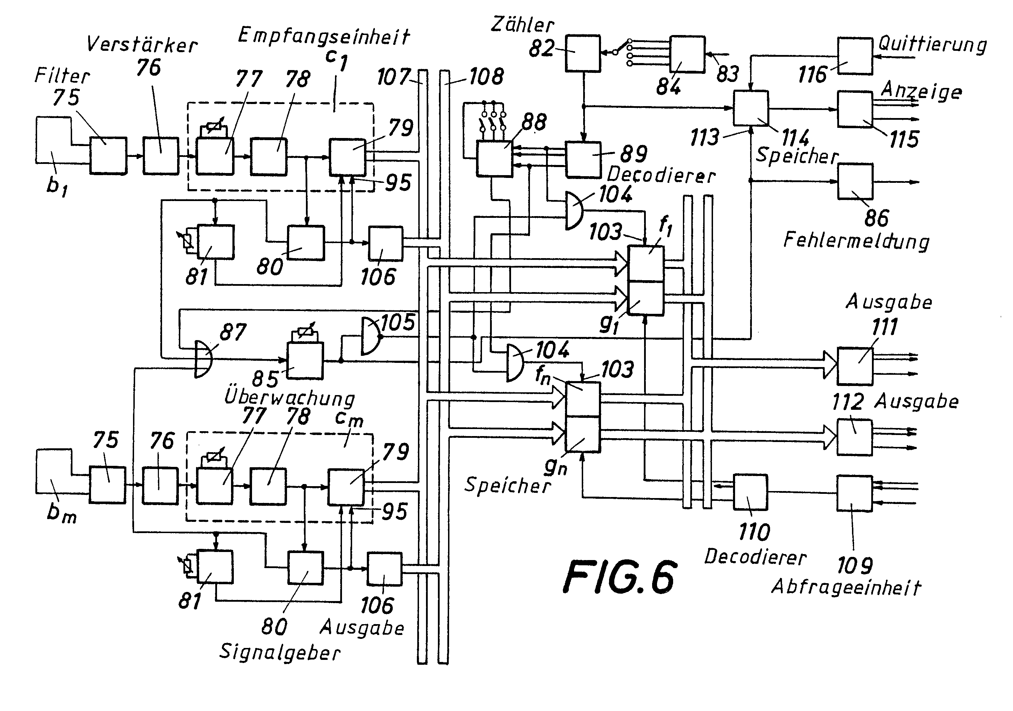

Nach Fig. 6 werden nicht die einzelnen Rückmeldeschleifen $b_1$ bis $b_m$ hinsichtlich der in ihrem Bereich befindlichen Fördermittel $a_1$ bis $a_n$, sondern die einzelnen Fördermittel $a_b$ bis $a_n$ selbst bezüglich ihrer Lage auf der Fahrbahn 1 erfaßt. Dementsprechend sind jedem Fördermittel $a_1$ bis $a_n$ ein Speicher $f_1$ bis $f_n$ für die Rückmeldetelegramme und ein Speicher $g_1$ bis $g_n$ für die Ordnungszahlen 1 bis m der einzelnen Rückmeldeschleifen $b_1$ bis $b_m$ zugeordnet. Um das von einer Empfangseinheit c empfangene Rückmeldetelegramm in den Speicher $f_1$ bis $f_n$ ablegen zu können, der die Kennung des sendenden Fördermittels a trägt, werden die Speicher nacheinander entsprechend dem Rückmeldezyklus aktiviert, indem die Einlese-Steuereingänge 103 der Speicher f und g jeweils an den Ausgang für die jeweilige Kennung des Decodierers 89 angeschlossen werden. Dieser Anschluß erfolgt jeweils über ein UND-Gatter 104, so daß ein Einlesebefehl nur gegeben werden kann, wenn die Empfangsüberwachung 85 keine Fehlermeldung gibt. Die UND-Gatter 104 sind daher mit einem Eingang über einen Inverter 105 an den Ausgang der Empfangsüberwachung 85 angeschlossen.

Wird ein Rückmeldetelegramm von einer der Empfangseinheiten $c_1$ bis $c_m$ empfangen, so wird über den Steuerbefehlgeber 80 ein Steuersignal einerseits an den Auslese-Steuereingang 95 des Signalspeichers 79 und anderseits an eine Ausgabeeinheit 106 für die jeweilige Ordnungsnummer 1 bis m der Rückmeldeschleife b bzw. der Empfangseinheit c gelegt. Demzufolge liegen an den Speichern $f_1$ bis $f_n$ und $g_1$ bis $g_n$ über die Datenbusse 107 und 108 das empfangene Rückmeldetelegramm und die Ordnungsnummer der das Rückmeldetelegramm empfangenden Empfangseinheit c an und werden in die dem sendenden Fördermittel a zugehörenden Speicher f und g eingelesen. Mit Hilfe einer Abfrageeinheit 109 können die Speicher f und g paarweise über einen Decodierer 110 angewählt und kann das angewählte Speicherpaar in entsprechende Ausgabeeinheiten 111 und 112 ausgelesen werden, wobei zu jedem Fördermittel a, dessen Kennung in die Abfrageeinheit 109 eingegeben wird, die Ordnungsnummer der Rückmeldeschleife, in deren Bereich sich das Fördermittel befindet, und das gesendete Rückmeldetelegramm erhalten werden.

Bei einer Fehlererkennung wird der Einlese-Steuereingang 103 der Speicher f und g über die Empfangsüberwachung 85 gesperrt und gleichzeitig ein Einlesebefehl an den Steuereingang 113 eines zusätzlichen Speichers 114 abgegeben, der an den Ringzähler 82 des Kennungsgebers angeschlossen ist und die Kennung jenes Fördermittels abspeichert, bei der der Fehler auftritt. Über eine Anzeige 115 kann die gespeicherte Kennung ausgelesen werden. Zum Löschen des Speichers 114 ist eine Fehlerquittierungseingabe 116 vorgesehen.

**Ansprüche**

1. Anlage zur induktiven Übertragung von Signaltelegrammen zwischen einer ortsfesten Sende- und Empfangsstation (2) und einzelnen Fördermitteln (a), die jeweils einen Sender (7) und einen Empfänger (5) aufweisen, der nur auf Signaltelegramme mit einem bestimmten, eine Kennung für das jeweilige Fördermittel (a) bildenden Codesignal anspricht, und die auf einer Fahrbahn (1) entlang einer sich über die Fahrbahnlänge erstreckenden, an den Sendeteil der ortsfesten Sende- und Empfangsstation (2) angeschlossenen Sendeschleife (4) bewegbar sind, neben der entlang der Fahrbahn (1) eine mit dem Empfangsteil der ortsfesten Sende- und Empfangsstation (2) verbundene Rückmeldeleitung (b) vorgesehen ist, dadurch gekennzeichnet, daß die Rückmeldeleitung (b) aus mehreren je einem Fahrbahnabschnitt zugeordneten, an je einer Empfangseinheit ($c_1$ bis $c_m$) des Empfangsteiles der ortsfesten Sende- und Empfangsstation

(2) angeschlossenen Rückmeldeschleifen ($b_1$ bis $b_m$) besteht, deren Länge der Länge der Fördermittel (a) entsprechen.

2. Anlage nach Anspruch 1, dadurch gekennzeichnet, daß die Sendeschleife (4) und die Rückmeldeschleife ($b_1$ bis $b_m$) in aufeinander senkrecht stehenden Ebenen liegen, von denen zumindest eine die Längsachse der jeweils der anderen Ebene zugehörigen Schleife enthält.

3. Anlage nach Anspruch 1 oder 2, dadurch gekennzeichnet, daß die mit je einer Rückmeldeschleife ($b_1$ bis $b_m$) verbundenen Empfangseinheiten ($c_1$ bis $c_m$) der Sende- und Empfangsstation (2) an einer Auswerteschaltung (12) angeschlossen sind, die mit einem vom Sendeteil gesteuerten Kennungsgeber verbunden ist und die vom Kennungsgeber in der gleichen, aber zeitverschobenen Reihenfolge der senderseitigen Fördermittelanwahl zur Verfügung gestellten Kennungen den in den Empfangseinheiten ($c_1$ bis $c_m$) von den angewählten Fördermitteln ($a_1$ bis $a_n$) empfangenen Rückmeldetelegrammen zuordnet.

4. Anlage nach Anspruch 3, dadurch gekennzeichnet, daß die Auswerteschaltung (12) für jede Empfangseinheit ($c_1$ bis $c_m$) einen an den Kennungsgeber angeschlossenen Speicher ($e_1$ bis $e_m$), dessen Steuereingang (91) für den Einlesebefehl mit einem von den zugehörigen Empfangseinheiten ($c_1$ bis $c_m$) ansteuerbaren Steuerbefehlgeber (80) verbunden ist, und eine Abfrageeinheit (92) aufweist, die sowohl an die Steuereingänge (94) für den Auslesebefehl der Speicher ($e_1$ bis $e_m$) für die Kennung als auch an die Auslese-Eingänge (95) der den Empfangseinheiten ($c_1$ bis $c_m$) zugeordneten Speicher (79) für die Rückmeldetelegramme angeschlossen ist.

5. Anlage nach Anspruch 3, dadurch gekennzeichnet, daß die Auswerteschaltung (12) eine der Fördermittelanzahl (n) entsprechende Anzahl von Speichern ($f_1$ bis $f_n$) für die empfangenen Rückmeldetelegramme aufweist, daß für die einzelnen Empfangseinheiten ($c_1$ bis $c_m$) jeweils von der zugehörigen Empfangseinheit ansteuerbare Ausgabeeinheiten (106) für ein bestimmtes, diese Empfangseinheit kennzeichnendes Codesignal vorgesehen sind, daß den Rückmeldetelegramm-Speichern ($f_1$ bis $f_n$) je ein mit den Ausgabeeinheiten (106) verbundener Codesignal-Speicher ($g_1$ bis $g_n$) zugeteilt ist und daß die Steuereingänge (103) für den Einlesebefehl sowohl der Codesignal-Speicher ($g_1$ bis $g_n$) als auch der Rückmeldetelegramm-Speicher ($f_1$ bis $f_n$) im Takt der Kennungsausgabe nacheinander an den Kennungsgeber angeschlossen sind.

6. Anlage nach einem der Ansprüche 3 bis 5, dadurch gekennzeichnet, daß jede Empfangseinheit ($c_1$ bis $c_m$) an eine den Empfang eines Rückmeldetelegrammes innerhalb einer vorbestimmten Zeit überprüfende Überwachungseinrichtung (81) angeschlossen ist, die mit einem Löscheingang der Rückmeldetelegramm-Speicher (79) in Verbindung steht.

7. Anlage nach einem der Ansprüche 3 bis 6, dadurch gekennzeichnet, daß die Auswerteschaltung (12) eine Empfangsüberwachung (85) umfaßt, deren Eingang über ein ODER-Gatter (87) an alle Empfangseinheiten ($c_1$ bis $c_m$) der Sende- und Empfangsstation (2) und deren Ausgang an eine Fehlermeldung (86) angeschlossen sind.

8. Anlage nach den Ansprüchen 4, 6, 7, dadurch gekennzeichnet, daß die Kennung-Speicher ($e_1$ bis $e_m$) mit ihren Löscheingängen (98) jeweils über ein UND-Gatter (99) einerseits an dem invertierten Ausgang der Empfangsüberwachung (85) und anderseits an den jeweils zugehörigen Überwachungseinrichtungen (81) der Empfangseinheiten ($c_1$ bis $c_m$) angeschlossen sind.

9. Anlage nach den Ansprüchen 4, 6 und 7, dadurch gekennzeichnet, daß die Steuereingänge (91) für den Einlesebefehl der Kennung-Speicher ($e_1$ bis $e_m$) jeweils über ein ODER-Gatter (102) einerseits am zugehörigen Steuerbefehlgeber (80) und anderseits an einem UND-Gatter (101) angeschlossen sind, das jeweils mit der zugehörigen Überwachungseinrichtung (81) der Empfangseinheiten ($c_1$ bis $c_m$) und mit dem Ausgang der Empfangsüberwachung (85) verbunden ist.

10. Anlage nach den Ansprüchen 4, 5 und 7, dadurch gekennzeichnet, daß die Steuereingänge (103) für den Einlesebefehl der Rückmeldetelegramm-Speicher ($f_1$ bis $f_n$) und der Codesignal-Speicher ($g_1$ bis $g_n$) über ein UND-Gatter (104) einerseits an den invertierten Ausgang der Empfangsüberwachung (85) und anderseits an den zugehörigen Ausgang des für jede Kennung einen gesonderten Ausgang aufweisenden Kennungsgebers (82, 89) angeschlossen sind.

11. Anlage nach den Ansprüchen 4, 5 und 7, dadurch gekennzeichnet, daß der Ausgang der Empfangsüberwachung (85) mit dem Einlese-Steuereingang (113) eines an den Kennungsgeber angeschlossenen Kennung-Speichers (114) verbunden ist.

**Claims**

1. A system for an inductive transmission of signal messages between a stationary transmitting and receiving station (2) and individual conveying elements (a), each of which comprises on transmitter (7) and one receiver (5), which is responsive only to signal messages that include a predetermined code signal, which constitutes an identification for the respective conveying element (a) and which conveying elements are movable on a path of travel (1) along a transmitting loop (4), which extends throughout the length of the path of travel and is connected to the transmitting part of the stationary transmitting and receiving station (2) and a feedback line (b) is provided, which extends along the path of travel (1) and is connected to the receiving part of the stationary transmitting and receiving station (2), characterized in that the feedback line (b) consists of a plurality of feedback loops ($b_1$ to

$b_m$) which are connected to respective receiving units ($c_1$ to $c_m$) of the receiving part of the stationary transmitting and receiving station (2) and have the same length as the conveying elements (a).

2. A system according to claim 1, characterized in that the transmitting loop (4) and the feedback loop ($b_1$ to $b_m$) extend in planes which are at right angles to each other and at least one of which contains the longitudinal axis of that loop which is contained in the other plane.

3. A system according to claim 1 or 2, characterized in that the receiving units ($c_1$ to $c_m$) of the transmitting and receiving station (2) are connected to respective feedback loops ($b_1$ to $b_m$) and to an evaluating circuit (12), which is connected to an identification generator that is controlled by the transmitting part and makes available to the conveying element selector of the transmitting part the identifications in the same sequence, but with a time delay, and the evaluating circuit coordinates said identifications with the feedback messages coming from the selected conveying elements ($a_1$ to $a_n$) and received by the receiving units ($c_1$ to $c_m$).

4. A system according to claim 3, characterized in that the evaluating circuit (12) comprises for each receiving unit ($c_1$ to $c_m$) a memory ($e_1$ to $e_m$) and an interrogating unit (92), said memory has a read-in command control unit (91), which is connected to a control command generator (80), which is adapted to be controlled by the associated receiving units ($c_1$ to $c_m$), and the interrogating unit is connected to the read-out command control units (94) of the identification memories ($e_1$ to $e_m$) and to the read-out inputs (95) of the feedback message memories (79) which are associated with the receiving units ($c_1$ to $c_m$).

5. A system according to claim 3, characterized in that the evaluating circuit (12) comprises memories ($f_1$ to $f_n$) for the received feedback messages in a number corresponding to the number (n) of conveying elements, output units (106) are provided for respective receiving units ($c_1$ to $c_m$) and are adapted to be controlled by the associated receiving units and to deliver a predetermined code signal, which identifies said receiving unit, each feedback message memory ($f_1$ to $f_n$) has associated with it a code signal memory ($g_1$ to $g_n$), which is connected to the output units (106), and the read-in command control inputs (103) of the code signal memories ($g_1$ to $g_n$) and of the feedback message memories ($f_1$ to $f_n$) are being connected to the identification generator in step with the delivery of identifications.

6. A system according to any of claims 3 to 5, characterized in that each receiving unit ($c_1$ to $c_m$) is connected to a monitoring device (81), which checks whether a feedback message is received within a predetermined time and which is connected to an erase input of the feedback message memories (79).

7. A system according to any of claims 3 to 6, characterized in that the evaluating circuit comprises a reception monitor (85), the input of which is connected by OR gate (87) to all receiving units ($c_1$ to $c_m$) of the transmitting and receiving station (2) and the output of which is connected to an error indicator (86).

8. A system according to claims 4, 6, 7, characterized in that the erase inputs (98) of the identification memories ($e_1$ to $e_m$) are connected via respective AND gates (99) to the inverted output of the reception monitor (85) and to the associated monitoring devices (81) of the receiving units ($c_1$ to $c_m$).

9. A system according to claims 4, 6 and 7, characterized in that the read-in command control units (91) of the identification memories ($e_1$ to $e_m$) are connected by respective OR gates (102) to the associated control command generator (80) and to an AND gate (101), which is connected to the associated monitoring device (81) for the receiving units ($c_1$ to $c_m$) and to the output of the reception monitor (85).

10. A system according to claims 4, 5 and 7, characterized in that the read-in command control inputs (103) of the feedback message memories ($f_1$ to $f_n$) and of the code signal memories ($g_1$ to $g_n$) are connected by an AND gate (104) to the inverted input of the reception monitor (85) and to the associated output of the identification generator (82, 89), which has a separate output for each identification.

11. A system according to claims 4, 5 and 7, characterized in that the ouptut of the reception monitor (85) is connected to the read-in control input (113) of an identification memory (114) connected to the identification generator.

## Revendications

1. Installation pour la transmission par induction de télégrammes de signaux entre un poste émetteur-récepteur fixe (2) et différents appareils de manutention (a) qui présentent chacun un émetteur (7) et un récepteur (5) répondant seulement à des télégrammes de signaux comportant un signal de code déterminé formant un indicatif pour l'appareil de manutention (a) dont il s'agit, et qui peuvent se mouvoir sur une voie (1) le long d'une boucle d'émission (4) s'étendant sur la longueur de la voie, reliée à la partie émettrice du poste émetteur-récepteur fixe (2) et à côté de laquelle est prévue une ligne d'annonce en retour (b) reliée à la partie réceptrice du poste émetteur-récepteur fixe (2), caractérisée par le fait que la ligne d'annonce en retour (b) est formée de plusieurs boucles d'annonce en retour ($b_1$ à $b_m$) adjointes chacune à un tronçon de voie, reliées chacune à une unité réceptrice ($c_1$ à $c_m$) de la partie réceptrice du poste émetteur-récepteur fixe (2) et dont la longueur correspond à la longueur des appareils de manutention (a).

2. Installation selon la revendication 1, caractérisée par le fait que la boucle d'émission (4) et la boucle d'annonce en retour ($b_1$ à $b_m$) sont situées dans des plans perpendiculaires entre eux dont l'un au moins contient l'axe longitudinal de la boucle adjointe à l'autre plan respectif.

3. Installation selon l'une quelconque des revendications 1 et 2, caractérisée par le fait que les unités réceptrices ($c_1$ à $c_m$) du poste émetteur-récepteur (2), reliées chacune à une boucle d'annonce en retour ($b_1$ à $b_m$), sont raccordées à un circuit d'interprétation (12) qui est relié à un transmetteur d'indicatif commandé par la partie émettrice et qui affecte, aux télégrammes d'annonce en retour reçus des appareils de manutention sélectionnés ($a_1$ à $a_n$), dans les unités réceptrices ($c_1$ à $c_m$), les indicatifs fournis par le transmetteur d'indicatifs dans un ordre de succession semblable à celui de la sélection des appareils de manutention du côté de l'émetteur, mais avec décalage dans le temps.

4. Installation selon la revendication 3, caractérisée par le fait que le circuit d'interprétation (12) présente, pour chaque unité réceptrice ($c_1$ à $c_m$), une mémoire ($e_1$ à $e_m$) raccordée au transmetteur d'indicatif et dont l'entrée de commande (91) destinée à l'ordre d'introduction est reliée à un transmetteur d'ordre de commande (80) pouvant être sélectionné par les unités réceptrices correspondantes ($c_1$ à $c_m$), et une unité d'interrogation (92) qui est raccordée aussi bien aux entrées de commande (94) destinées à l'ordre de lecture de l'indicatif dans les mémoires ($e_1$ à $e_m$) qu'aux entrées de lecture (95) de télégrammes d'annonce en retour des mémoires (79) adjointes aux unités réceptrices ($c_1$ à $c_m$).

5. Installation selon la revendication 3, caractérisée par le fait que le circuit d'interprétation (12) présente pour les télégrammes d'annonce en retour reçus un nombre de mémoires ($f_1$ à $f_n$) correspondant au nombre (n) des appareils de manutention, que pour les différentes unités réceptrices ($c_1$ à $c_m$) sont prévues des unités de sortie (106) pouvant être sélectionnées chaque fois par l'unité réceptrice correspondante et destinées à un signal de code déterminé identifiant cette unité réceptrice, qu'à chacune des mémoires de télégramme d'annonce en retour ($f_1$ à $f_n$) est attribuée une mémoire de signal de code ($g_1$ à $g_n$), reliée aux unités de sortie (106), et que les entrées de commande (103) destinées à l'ordre d'introduction, aussi bien dans les mémoires de signal de code ($g_1$ à $g_n$) que dans les mémoires de télégramme d'annonce en retour ($f_1$ à $f_n$), sont raccordées successivement au transmetteur d'indicatifs, au rythme de la sortie des indicatifs.

6. Installation selon l'une des revendications 3 à 5, caractérisée par le fait que chaque unité réceptrice ($c_1$ à $c_m$) est raccordée à un dispositif de surveillance (81) vérifiant la réception d'un télégramme d'annonce en retour dans les limites d'un temps prédéterminé et qui est en liaison avec une entrée d'effacement de la mémoire de télégramme d'annonce en retour (79).

7. Installation selon l'une des revendications 3 à 6, caractérisée par le fait que le circuit d'interprétation (12) comprend une surveillance de réception (84) dont l'entrée est raccordée par l'intermédiaire d'une porte «OU» (87) à toutes les unités réceptrices ($c_1$ à $c_m$) du poste émetteur-récepteur (2) et dont la sortie est raccordée à une détection d'erreurs (86).

8. Installation selon l'une des revendications 4, 6 et 7, caractérisée par le fait que les mémoires d'indicatif ($e_1$ à $e_m$) sont raccordées par leurs entrées d'effacement (98), chacune par l'intermédiaire d'une porte «ET» (99), d'une part, à la sortie inversée de la surveillance de réception (85) et, d'autre part, aux dispositifs de surveillance chaque fois correspondants (81) des unités réceptrices ($c_1$ à $c_m$).

9. Installation selon l'une des revendications 4, 6 et 7, caractérisée par le fait que les entrées de commande (91) des mémoires d'indicatif ($e_1$ à $e_m$), destinées à l'ordre d'introduction, sont raccordées chacune par l'intermédiaire d'une porte «OU» (102), d'une part, au transmetteur d'ordre de commande (80) et, d'autre part, à une porte «ET» (101) qui est chaque fois reliée au dispositif de surveillance correspondant (81) des unités réceptrices ($c_1$ à $c_m$) et à la sortie de la surveillance de réception (85).

10. Installation selon l'une des revendications 4, 5 et 7, caractérisée par le fait que les entrées de commande (103) des mémoires de télégramme d'annonce en retour ($f_1$ à $f_n$) et des mémoires de signal de code ($g_1$ à $g_n$), destinées à l'ordre d'introduction, sont raccordées par l'intermédiaire d'une porte «ET» (104), d'une part, à l'entrée inversée de la surveillance de réception (85) et, d'autre part, à la sortie correspondante du transmetteur d'indicatif (82, 89) présentant pour chaque indicatif une sortie séparée.

11. Installation selon l'une des revendications 4, 5 et 7, caractérisée par le fait que la sortie de la surveillance de réception (85) est reliée à l'entrée de commande d'introduction (113) d'une mémoire d'indicatif (114) raccordée au transmetteur d'indicatif.

FIG.1

3
6
4
6
6

5 — $a_1$
Empfänger
5
$a_2$
Sender
5
$a_n$ Fördermittel

7
7
7
1

$b_1$ — $b_2$
$b_{m-4}$ $b_{m-3}$
$b_{m-2}$ $b_{m-1}$
$b_m$

8
8
8

$c_1$
$c_2$
$c_{m-4}$
$c_{m-3}$
$c_{m-2}$
$c_{m-1}$
$c_m$
Empfangseinheit

12 Auswerteschaltung

13

FIG.2

11
Sendeeinheit
10
9 Speicher
Sendersteuerung

2
Sende - und Empfangstation

6
4
14
b
8

0 053 599

FIG. 3

Verstärker
49

Verzögerungsglied
70

Filter
48

Prüfeinheit
50

Impulserzeuger
65

71  72  73

Leistungsstufe
74

69

6

53

52

58

59

68

7

Sender

51

54

5

60

66

67 Codierer

Empfänger

63

Speicher

62

55

64

Ausgabe
61

Eingabe
57

Überwachung

56 Fehlermeldung

FIG.4

0 053 599

3

FIG.5

0 053 599

**FIG.6**